# EUROPEAN PATENT APPLICATION

(11) **EP 4 718 860 A1**
(43) Date of publication of application: **01.04.2026**
(21) Application number: 24810151.1
(22) Date of filing: 25.04.2024
(51) Int. Cl.: H04N 23/84

(54) **IMAGE PROCESSOR, PROCESSING METHOD, STORAGE MEDIUM, AND MIXED REALITY DISPLAY SYSTEM**

(30) Priority: 22.05.2023 CN 202310598911
(71) Applicant: GravityXR Electronics and Technology Co., Ltd., Ningbo, Zhejiang 315200 (CN)
(72) Inventor: JIA, Tao, Ningbo, Zhejiang 315200 (CN); TIAN, Mengge, Ningbo, Zhejiang 315200 (CN); ZHAN, Jinfeng, Ningbo, Zhejiang 315200 (CN); ZHUANG, Jiayan, Ningbo, Zhejiang 315200 (CN); HE, Yongmeng, Ningbo, Zhejiang 315200 (CN); WANG, Chaohao, Ningbo, Zhejiang 315200 (CN); WANG, Shuang, Ningbo, Zhejiang 315200 (CN); YUAN, Ze, Ningbo, Zhejiang 315200 (CN)
(74) Representative: Nederlandsch Octrooibureau
(86) International application number: PCT/CN2024/089820
(87) International publication number: WO 2024/239904

(57) **Abstract**

The present invention provides an image processor, processing method, storage medium, and mixed reality display system. The image processor comprising: a first color manager, connected to a renderer with an input end thereof, for obtaining a virtual layer data from the renderer and performing a first color processing to the virtual layer data; a second color manager, connected to a camera with an input end thereof, for obtaining a real layer data from the camera and performing a second color processing to the real layer data; a layer mixer, respectively connected to the first color manager and the second color manager with an input end thereof, for performing a layer mixing processing to the virtual layer data and the real layer data processed by the color managers, to determine a mixed image data; and a third color manager, connected to the layer mixer with an input end thereof, for obtaining the mixed image data from the layer mixer, performing a third color processing to the mixed image data, and outputting a mixed image data undergone the third color processing to a mixed reality display.

## Description

The present invention claims priority to a patent application titled "Image processor, processing method, storage medium and mixed reality display system" with Chinese application number 202310598911.8, filed on May 22, 2023.

### Technical Field

The present invention relates to the field of mixed reality display, particularly to an image processor, an image processing method, a mixed reality display system, and a non-transitory computer-readable storage medium.

### Background

In the field of mixed reality (MR) display, existing MR devices can only perform simple processing to the color and brightness of input images, but do not support the input and processing of high dynamic range (HDR) data. The existing color processing pipelines of image processing devices such as mobile phones can decode single or multiple HDR signals and adapt to Standard Dynamic Range (SDR), but they cannot meet the application requirements of mixed reality display, which first requires front-end processing of color gamut, hue, and color temperature for the Video See Through (VST) signal and the Virtual Reality (VR) layer signal, and then back-end processing of color gamut, color tone, and color temperature for the mixed layer signal after layer mixing.

In order to overcome the above shortcomings of existing technology, there is an urgent need in this field for an image processing technology for mixed reality display, for providing flexible color processing functions in different color spaces of virtual layers, real layers, and mixed layers, thereby meeting the application requirements of mixed reality display.

### Summary

A brief overview of one or more aspects is provided below to provide a basic understanding of these aspects. The summary is not an exhaustive overview of all aspects envisaged, and is neither intended to identify the key or decisive elements of all aspects nor to attempt to define the scope of any or all aspects. The sole purpose of the summary is to present some concepts of one or more aspects in a simplified form as a prelude to the more detailed description that is presented later.

In order to overcome the above shortcomings of existing technology, the present invention provides an image processor, an image processing method, a mixed reality display system, and a non-transitory computer-readable storage medium that can support flexible color processing functions, including front-end color processing of Video See Through (VST) signals and Virtual Reality (VR) layer signals with different color gamuts, color tones and color temperatures respectively, and back-end color processing of the mixed layer signals after layer mixing with corresponding color gamut, color tone and color temperature, thereby meeting the application requirements of mixed reality display.

Specifically, the image processor provided according to the first aspect of the present invention comprising: a first color manager, connected to a renderer with an input end thereof, for obtaining a virtual layer data from the renderer and performing a first color processing to the virtual layer data; a second color manager, connected to a camera with an input end thereof, for obtaining a real layer data from the camera and performing a second color processing to the real layer data; a layer mixer, respectively connected to the first color manager and the second color manager with an input end thereof, for performing a layer mixing processing to the virtual layer data processed by the first color manager and the real layer data processed by the second color manager, to determine a mixed image data; and a third color manager, connected to the layer mixer with an input end thereof, for obtaining the mixed image data from the layer mixer, performing a third color processing to the mixed image data, and outputting a mixed image data undergone the third color processing to a mixed reality display.

Further, in some embodiments of the present invention, the image processor further comprising a communication interface. The communication interface is connected to a color processing firmware and each of the color managers. The first color manager is configured to obtain a first register data from the color processing firmware via the communication interface according to a first color processing requirement, and return first statistical information to the color processing firmware, the second color manager is configured to obtain a second register data from the color processing firmware via the communication interface according to a second color processing requirement, and return second statistical information to the color processing firmware, the third color manager is configured to obtain a third register data from the color processing firmware via the communication interface according to a third color processing requirement, and return third statistical information to the color processing firmware.

Further, in some embodiments of the present invention, each of the color managers respectively comprises a color tone mapper, a color gamut mapper and a color temperature processor, and is configured to obtain a register data related to at least one of color tone mapping, color gamut mapping and color temperature processing, from the color processing firmware via the communication interface, according to corresponding color processing requirement, and return statistical information related to the at least one of color tone mapping, color gamut mapping and color temperature processing to the color processing firmware.

Further, in some embodiments of the present invention, each of the color managers is further configured as: performing a histogram equalization processing to a corresponding virtual layer data, a corresponding real layer data or a corresponding mixed image data, according to the register data related to the color tone mapping, to determine the statistical information related to the color tone mapping; and/or in response to a color processing requirement of transitioning from a large color gamut to a small color gamut, performing a mapping processing step by step to a corresponding virtual layer data, a corresponding real layer data or a corresponding mixed image data, according to the register data related to the color gamut mapping, to determine the statistical information related to the color gamut mapping.

Further, in some embodiments of the present invention, each of the color managers further comprises a ReGamma unit and/or a DeGamma unit, and is configured to obtain a register data related to ReGamma processing and/or DeGamma processing from the color processing firmware via the communication interface, according to the corresponding color processing requirement, and return statistical information related to the ReGamma processing and/or the DeGamma processing to the color processing firmware.

Further, in some embodiments of the present invention, the renderer further inputs an HDR metadata into the color processing firmware, and each of the color managers further comprises an HDR unit, and is configured to obtain a register data related to HDR processing from the color processing firmware via the communication interface, according to the corresponding color processing requirement, and return statistical information related to the HDR processing to the color processing firmware, wherein the register data related to HDR processing is updated and determined according to the HDR metadata and returned statistical information related to the HDR processing.

Further, in some embodiments of the present invention, the image processor further comprising the color processing firmware. The color processing firmware is configured as: obtaining external light parameter information; and performing at least one of generating a color tone curve, generating a color gamut mapping function, performing a color temperature adjusting calculation and performing a brightness adjusting calculation, to update the register data, according to the light parameter information and the statistical information returned by at least one of the color managers.

Further, in some embodiments of the present invention, data volume of the first register data and data volume of the second register data are smaller than data volume of the third register data, and data volume of the first statistical information and data volume of the second statistical information are smaller than data volume of the third statistical information.

Further, in some embodiments of the present invention, the image processor according to claim 1, wherein the renderer is further used for rendering and generating one or more UI layer data, and the first color manager is further configured as: obtaining the one or more UI layer data from the renderer and performing corresponding one or more fourth color processing to the UI layer data; and inputting a UI layer data undergone the one or more fourth color processing into the layer mixer for performing the layer mixing processing, to determine a corresponding mixed image data.

Further, in some embodiments of the present invention, the image processor according to claim 1, further comprising an image signal processor, wherein the second color manager is connected to the camera via the image signal processor, and the image signal processor is configured as: obtaining a video stream data captured by the camera; and performing an AWB processing and/or an AE processing to the video stream data, to generate the real layer data.

In addition, the mixed reality display system provided according to the second aspect of the present invention comprising: a renderer, for generating a virtual layer data; a camera, for capturing a real layer data; and an image processor according to claim 1, connected to the renderer and the camera to obtain the virtual layer data and the real layer data, and perform image processing according to the virtual layer data and the real layer data to output a mixed image data to be displayed.

In addition, the image processing method provided according to the third aspect of the present invention comprising: obtaining a virtual layer data from a renderer, and input the virtual layer data into a first color manager; obtaining a real layer data from a camera and input the real layer data into a second color manager; obtaining a color processing requirement; controlling the first color manager to perform a first color processing to the virtual layer data, and/or controlling the second color manager to perform a second color processing to the real layer data, according to the color processing requirement; performing a layer mixing processing to the layer data processed by the first color manager and the second color manager by a layer mixer to determine a mixed image data; inputting the mixed image data to a third color manager, and performing a third color processing according to the color processing requirement; and transmitting mixed image data outputted by the third color manager to a mixed reality display.

In addition, the non-transitory computer-readable storage medium provided according to the third aspect of the present invention, on which a computer instruction is stored. When the computer instruction is executed by a processor, the image processing method according to the first aspect of the present invention is implemented.

### Brief Description of the Drawings

After reading the detailed description of the disclosed embodiments in conjunction with the following figures, one can better understand the above features and advantages of the present invention. In the figures, components are not necessarily drawn to scale, and components with similar related characteristics or features may have the same or similar reference numerals.
Fig. 1 shows a structure schematic diagram of the mixed reality display system provided according to some embodiments of the invention.
Fig. 2 shows a flowchart of the image processing method provided according to some embodiments of the invention.
Fig. 3 shows a flowchart for processing images in typical data formats provided according to some embodiments of the invention.
Fig. 4 shows a flowchart for processing images in typical data formats provided according to some embodiments of the invention.

### Detailed Description of Embodiments

The implementations of the present invention are described below by specific embodiments. Those skilled in the art can easily understand other advantages and effects of the present invention from the contents disclosed in the description. Although the description of the present invention is introduced together with preferred embodiments, it does not mean that the features of the present invention are limited to the embodiments. On the contrary, the purpose of introducing the present invention in combination with the embodiments is to cover other options or modifications that may be extended based on the claims of the present invention. In order to provide a deep understanding of the present invention, the following description will contain many specific details. The present invention can also be implemented without using these details. In addition, in order to avoid confusion or ambiguity of the key points of the present invention, some specific details is omitted in the description.

In the description of the disclosure, it should be noted that, unless otherwise specified and defined, the terms "installation", "connecting" and "connection" should be understood in a broad sense. For example, they can be fixed connection, removable connection or integrated connection; mechanical connection or electrical connection; as well as direct connection, indirect connection through intermediate media or internal connection of two components. For those skilled in the art, the specific meaning of the above terms in the present invention can be understood in specific cases.

In addition, the words "up", "down", "left", "right", "top", "bottom", "horizontal" and "vertical" used in the following description should be understood as the orientation shown in this paragraph and the relevant drawings. This relative term is only for convenience of explanation, and does not mean that the described device needs to be manufactured or operated in a specific direction, so it should not be understood as a limitation of the present invention.

It is understood that although the terms "first", "second", "third", etc. can be used here to describe various components, regions, layers and/or parts, these components, regions, layers and/or parts should not be limited by these terms, and these terms are only used to distinguish different components, regions, layers and/or parts. Therefore, a first component, area, layer and/or part discussed below can be referred to as a second component, area, layer and/or part without departing from some embodiments of the present invention.

As mentioned above, in the field of mixed reality (MR) display, existing MR devices can only perform simple processing on the color and brightness of input images, but do not support the input and processing of high dynamic range (HDR) data. The existing color processing pipelines of image processing devices such as mobile phones can decode single or multiple HDR signals and adapt to Standard Dynamic Range (SDR), but they cannot meet the application requirements of mixed reality display, which first requires front-end processing of color gamut, hue, and color temperature for the Video See Through (VST) signal and the Virtual Reality (VR) layer signal, and then back-end processing of color gamut, color tone, and color temperature for the mixed layer signal after layer mixing.

In order to overcome the above shortcomings of existing technology, the present invention provides an image processor, an image processing method, a mixed reality display system, and a non-transitory computer-readable storage medium that can support flexible color processing functions of front-end color processing of VST signals and VR layer signals with different color gamut, color tone, and color temperature, respectively, and back-end color processing of the mixed layer signals after layer mixing with corresponding color gamut, color tone, and color temperature, thereby meeting the application requirements of mixed reality display.

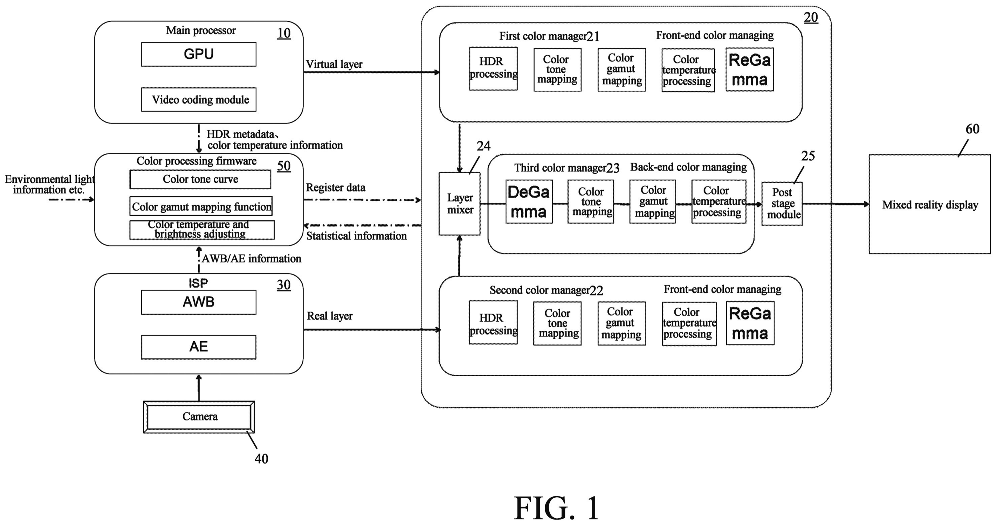

In some non-limiting embodiments, the image processing method provided in the third aspect of the present invention can be implemented through a mixed reality display system provided by the second aspect of the present invention. Please refer to Fig. 1 for details. Fig. 1 shows a structure schematic diagram of the mixed reality display system provided according to some embodiments of the invention.

In the embodiment shown in Fig. 1, the mixed reality display system is configured with a main processor 10, a display pipeline 20, an image signal processing (ISP) pipeline 30, a camera 40, and a memory (not shown).

The memory includes but is not limited to the non-transitory computer-readable storage medium provided in the fourth aspect of the present invention, on which a computer instruction for executing one or more steps of the image processing method provided in the third aspect of the present invention is stored.

The main processor 10 is configured with renderers such as Graphics Processing Unit (GPU) and Video Coding module, for generating a virtual layer data and transmit the virtual layer data to a first color manager 21 in the display pipeline 20 for a first color processing.

The display pipeline 20 is configured as the image processor provided in the first aspect of the present invention, comprising the first color manager 21, a second color manager 22, a third color manager 23, a layer mixer 24, and a post stage module 25,which can be used as a co-processor to implement the image processing method provided in the third aspect of the present invention by reading and executing computer instructions stored in the memory, thereby cooperating with the main processor 10 to perform mixed reality image processing.

The camera 40 can be connected to the display pipeline 20 via the ISP pipeline 30, for capturing a real layer data and transmitting the real layer data to the second color manager 22 in the display pipeline 20 for a second color processing.

The working principle of the above display pipeline 20 and the mixed reality display system will be described below in conjunction with some embodiments of some image processing methods. Those skilled in the art can understand that the embodiments of these image processing methods only provide some non-limiting implementations of the present invention, which is intended to clearly display the main idea of the present invention, and provide some specific proposals that are convenient for the public to implement, rather than limiting all working modes or all functions of the display pipeline 20 and the mixed reality display system. Similarly, the display pipeline 20 and the mixed reality display system are only a non-limiting embodiment provided by the present invention, and does not limit the implementation subject to each step in these image processing methods.

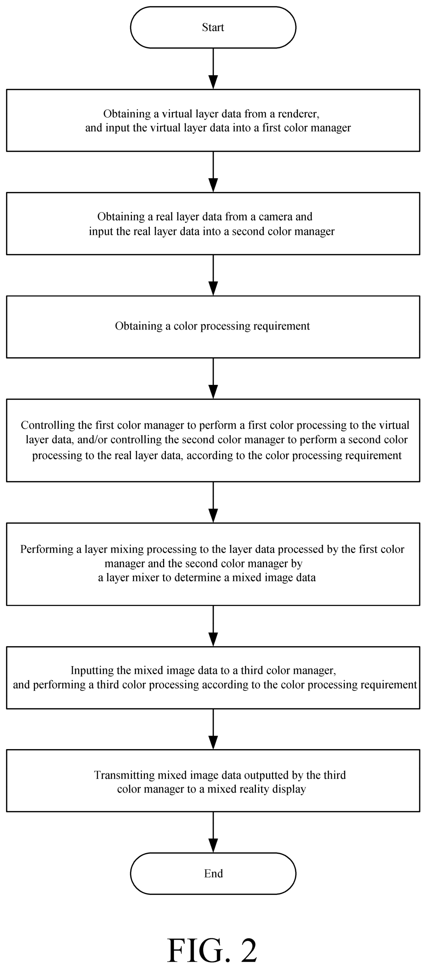

Please refer to Fig.1 and Fig.2 in combination, Fig. 2 shows a flowchart of the image processing method provided according to some embodiments of the invention.

As shown in Fig. 1 and Fig. 2, during the process of processing mixed reality images, the display pipeline 20 can first obtain the virtual layer data from the GPU and other renderers of the main processor 10, and input the virtual layer data into the first color manager 21. Herein, the virtual layer data may preferably include color temperature information generated by GPU rendering and other color related information.

In addition, the display pipeline 20 can also obtain the captured real layer data from the camera 40 via the ISP pipeline 30, and input the real layer data into the second color manager 22. Specifically, in the embodiment shown in Fig. 1, the ISP pipeline 30 may preferably be configured with an Automatic White Balance (AWB) unit and/or an Automatic Exposure (AE) unit. The ISP pipeline 30 can first obtain a video stream data captured by the camera, and then perform an AWB processing to the obtained video stream data by the AWB unit, and/or an AE processing to the obtained video stream data by the AE unit to generate the real layer data. Thus, the real layer data can also preferably include the AWB information and/or the AE information generated by the ISP pipeline 30.

Afterwards, the display pipeline 20 can obtain a color processing requirements for the virtual layer data and the real layer data from the mixed reality display system, and controlling the first color manager 21 to perform the first color processing to the virtual layer data, and/or controlling the second color manager 22 to perform the second color processing to the real layer data, according to the color processing requirement.

Specifically, in the embodiment shown in Fig. 1, the mixed reality display system can also preferably be configured with a color processing firmware 50. The color processing firmware 50 can capture external environmental light intensity information via sensors, obtain GPU rendered color temperature information via the main processor 10, obtain AWB and/or AE information generated via the ISP pipeline 30, and combine statistical information such as histograms returned by various color managers 21-23 in the display pipeline 20 to generate color tone curves, color gamut mapping functions, color temperature adjusting calculation and/or brightness adjusting calculation, in order to generate and update register data.

In response to the request instruction for the first color processing, the first color manager 21 can obtain a corresponding first register data from the color processing firmware 50 via the communication interface (not shown) of the display pipeline 20, to perform the first color processing to the virtual layer data, and return first statistical information generated by the processing to the color processing firmware 50, to regenerate and update the corresponding register data.

Further, in the embodiment shown in Fig. 1, the first color manager 21 may be preferably configured with a color tone mapper, a color gamut mapper, and a color temperature processor. In the process of performing the first color processing, the first color manager 21 can first obtain the first register data related to the first color gamut, first color tone, and first color temperature from the color processing firmware 50 via the communication interface, to perform the first color processing to the virtual layer data regarding color tone mapping, color gamut mapping, and/or color temperature processing and return first statistical information related to color tone mapping, color gamut mapping, and/or color temperature processing generated by the processing to the color processing firmware 50 to regenerate and update the corresponding register data.

Specifically, In the process of determining statistical information related to color tone mapping, the first color manager 21 can perform a histogram equalization processing to the virtual layer data according to the first register data related to color tone mapping to determine the statistical information related to color tone mapping. In addition, In the process of determining statistical information related to color gamut mapping, in response to a color processing requirement of transitioning from a large color gamut to a small color gamut, the first color manager 21 can perform mapping processing step by step to virtual layer data, according to the first register data related to the color gamut mapping, to determine the statistical information related to the color gamut mapping.

In addition, in the embodiment shown in Fig. 1, the first color manager 21 may also be preferably configured with a ReGamma unit and/or a DeGamma unit. In the process of performing the first color processing, the first color manager 21 can also obtain a first register data related to ReGamma processing and/or DeGamma processing from the color processing firmware via the communication interface, to perform corresponding ReGamma processing and/or DeGamma processing to the virtual layer data, and then return the first statistical information related to ReGamma processing and/or DeGamma processing generated by the processing to the color processing firmware 50 to regenerate and update the corresponding register data.

In addition, in the embodiment shown in Fig. 1, the first color manager 21 can also be preferably configured with an HDR unit. Correspondingly, the color processing firmware 50 can also preferably obtain the HDR metadata from renderers such as GPU of the main processor 10, and generate and update corresponding register data in combination with the HDR metadata. In the process of performing the first color processing, the first color manager 21 can also obtain the first register data related to HDR processing from the color processing firmware 50 via the communication interface, to perform HDR processing to the virtual layer data, and return the statistical information related to HDR processing generated by the processing to the color processing firmware 50 to regenerate and update the corresponding register data.

Thus, the present invention can flexibly perform HDR processing, color tone mapping, color gamut mapping, color temperature processing, and/or ReGamma processing to virtual layer data according to the actual first color processing request instruction received, and bypass processing on processors not involved in the request instruction to obtain the virtual layer data required for layer mixing.

Similarly, in the embodiment shown in Fig. 1, the second color manager 22 can also be preferably configured with the HDR unit, color tone mapper, color gamut mapper, color temperature processor, ReGamma unit, and/or DeGamma unit. In response to the request instruction for the second color processing, the second color manager 22 can also obtain a second register data related to HDR processing, color tone mapping, color gamut mapping, color temperature processing, ReGamma processing, and/or DeGamma processing from the color processing firmware 50 via the communication interface (not shown) of the display pipeline 20 as described above, to perform HDR processing, color tone mapping, color gamut mapping, color temperature processing, ReGamma processing, and/or DeGamma processing to the real layer data, and bypass processing on processors not involved in the request instruction to obtain the real layer data required for layer mixing. Afterwards, the second color manager 22 can also return the processed second statistical information to the color processing firmware 50 as described above to regenerate and update the corresponding register data. The specific steps of obtaining register data, performing front-end color processing, and returning statistical information are similar to the embodiment of the first color manager 21, and will not be further described here.

By respectively configuring two front-end color managers 21-22 for virtual layer data and real layer data, and providing bypass processing functions, the display pipeline 20 provided by the present invention can provide flexible color processing functions for virtual layer data and real layer data in different color spaces according to the actual requirement of mixed reality display, thereby meeting the application requirement of the mixed reality display.

Please continue to refer to Fig. 1 and Fig. 2, the input end of the layer mixer 24 are respectively connected to the first color manager 21 and the second color manager 22. After respectively completing the first color processing and the second color processing, the display pipeline 20 can perform a layer mixing processing to the virtual layer data processed by the first color manager and the real layer data processed by the second color manager via the layer mixer 24 to determine a mixed image data, and then input the mixed image data into the third color manager 23 for a third color processing according to color processing requirements.

Herein, the specific proposal for the layer mixing processing of a plurality of layer data does not relate to the technical improvement of the present invention, and therefore will not be further described.

The input end of the third color manager 23 is connected to the output end of the layer mixer 24, which is preferably configured with a color tone mapper, a color gamut mapper, a color temperature processor, the ReGamma unit, and/or the DeGamma unit. In the process of performing the third color processing, in response to the request instruction of the third color processing, the third color manager 22 can obtain the mixed image data from the layer mixer, and obtain a third register data related to color tone mapping, color gamut mapping, color temperature processing, ReGamma processing, and/or DeGamma processing from the color processing firmware 50, via the communication interface (not shown) of the display pipeline 20 as described above, to perform color tone mapping, color gamut mapping, color temperature processing, ReGamma processing, and/or DeGamma processing to the mixed image data, and bypass the processors not involved in the request instruction to obtain the display image data required for the mixed reality display. Afterwards, the third color manager 23 can also return the third statistical information generated by the third color processing to the color processing firmware 50 as described above, to regenerate and update the corresponding register data, and output the mixed image data (i.e. display image data) undergone the third color processing to the VR display screen or other mixed reality display 60 via the back-end module 25 for mixed reality display. Herein, the specific steps of obtaining register data, performing front-end color processing, and returning statistical information are similar to the embodiment of the first color manager 21, and therefore will not be further described.

Further, in some embodiments of the present invention, the display pipeline 20 may prioritize configuring the processing subunits related to the third color processing according to the color processing requirements of the mixed reality display, and correspondingly configure the third register data. Then, differentially configuring the processing subunits and register data related to the first and second color processing, according to the requirements of the layer mixing processing, thereby the data volume of the first register data and the second register data related to the front-end color management are smaller than data volume of the third register data related to the back-end color management, and data volume of the first statistical information and data volume of the second statistical information are smaller than data volume of the third statistical information. Thus, by configuring the data volume of front-end color management to be smaller than the data volume of back-end color management, the present invention can effectively save hardware resources for storing and computing duplicate data in the display pipeline 20, thereby improving the color management capability of the image processor under the same hardware resource conditions, or saving hardware resources under the same color management capability conditions.

Those skilled in the art in this field can understand that the above embodiment of configuring the data volume of front-end color management to be smaller than the data volume of back-end color management is only a preferred proposal provided by the present invention, which is intended to provide specific proposal that is convenient for the public to implement, rather than limiting the scope of protection of the present invention.

Alternatively, in some other embodiments, those skilled in the art may also use other methods to respectively configure the register data for the first, second, and third color processing. Even if the data volume of the first register data and the second register data related to the front-end color management is greater than or equal to the data volume of the third register data related to the back-end color management, it does not affect the normal operation of the display pipeline 20.

In addition, for some mixed reality display applications relating human-computer interaction graphical interfaces, videos, and other content, the mixed reality display system can also generate one or more corresponding UI layer data through renderers such as GPU of the main processor 10. Herein, the UI layer data can be HDR layer data or SDR layer data. The first color manager 21 of the display pipeline 20 can preferably obtain one or more UI layer data from the renderer and perform corresponding one or more fourth color processing according to the fourth color processing requirement. Afterwards, the first color manager 21 can also input the UI layer data undergone one or more fourth color processing into the layer mixer 24 for performing the layer mixing processing to determine the corresponding mixed image data, thereby meeting the requirement of the mixed reality display applications relating human-computer interaction graphical interfaces, videos, and other content.

Thus, by configuring a separate back-end color manager 23 for the mixed image data and providing a function of bypass processing, the display pipeline 20 provided by the present invention can provide a flexible function of color processing for the mixed image data in the corresponding color space according to the actual requirements of the mixed reality display, thereby further meeting the application requirements of the mixed reality display.

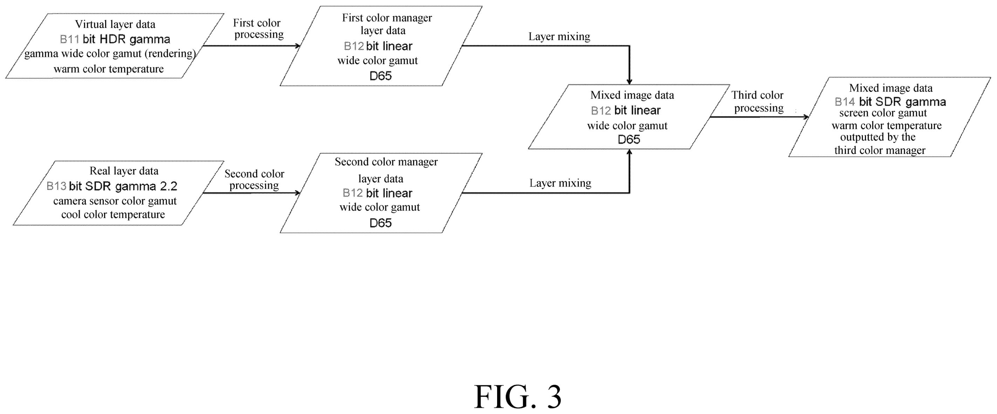

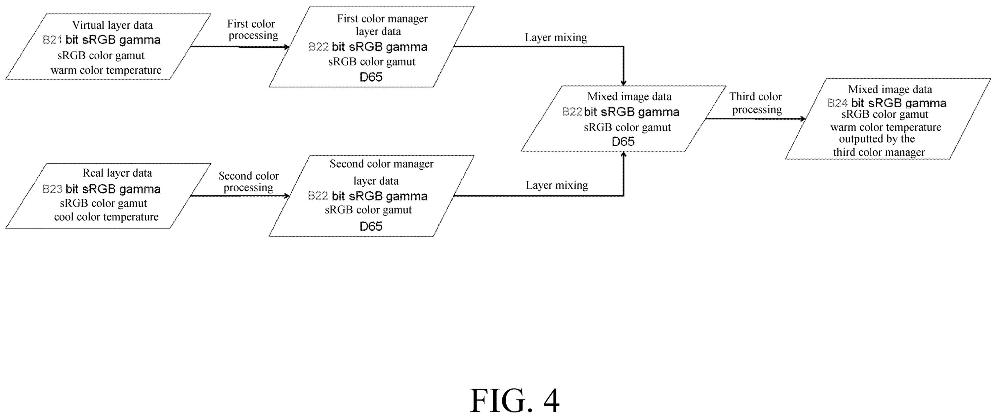

The following will continue to provide some non-limiting specific embodiments and demonstrate the specific working mode of the display pipeline 20 and the mixed reality display system provided by the present invention. Please respectively refer to Fig. 3 and Fig. 4, Fig. 3 and Fig. 4 respectively show flowcharts for processing images in typical data formats provided according to some embodiments of the invention.

In the embodiment shown in Fig. 3, the display pipeline 20 can first obtain the B11 bit, HDR, gamma, wide color gamut (rendering), and warm color temperature virtual layer data generated by rendering from the GPU of the main processor 10, and input the virtual layer data into the first color manager 21 for the first color processing to obtain B12 bit, linear, wide color gamut, and D65 first to be mixed data. In the meantime, the display pipeline 20 can also obtain the B13 bit, SDR, gamma 2.2, camera sensor color gamut, and cool color temperature the real layer data captured from the camera 40 through the ISP pipeline 30, and input the real layer data into the second color manager 22 for the second color processing to obtain B12 bit, linear, wide color gamut, D65 second mixed data.

Afterwards, the display pipeline 20 can perform the layer mixing processing to the first to be mixed data and the second to be mixed data via the layer mixer 24 to determine B12 bit, linear, wide color gamut, D65 mixed image data, and input the first to be mixed data and the second to be mixed data into the third color manager 23 for the third color processing to obtain B14 bit, SDR, gamma, screen color gamut, and warm color temperature to be displayed image data. It can be understood that B11~B14 represent the bit depth of each image, and the specific values thereof can be manually set according to actual accuracy requirements, without relating the technical improvements of the present application, and will not be described here.

In the embodiment shown in Fig. 4, the display pipeline 20 can first obtain the virtual layer data of B21 bits, sRGB, gamma, sRGB color gamut, and warm color temperature generated by rendering thereof from the GPU of the main processor 10, and input the virtual layer data into the first color manager 21 for the first color processing to obtain the first mixed data of B22 bits, sRGB, gamma, sRGB color gamut, and D65. In the meantime, the display pipeline 20 can also obtain the real layer data of B23 bits, sRGB, gamma, sRGB color gamut, and cool color temperature captured by the camera 40 via the ISP pipeline 30, and input the real layer data into the second color manager 22 for the second color processing to obtain the second to be mixed data of B22 bits, sRGB, gamma, sRGB color gamut, and D65.

Afterwards, the display pipeline 20 can perform the layer mixing processing to the first to be mixed data and the second to be mixed data via the layer mixer 24, to determine the B22 bit, sRGB, gamma, sRGB color gamut, D65 mixed image data, and input the first to be mixed data and the second to be mixed data into the third color manager 23 for the third color processing, to obtain B24 bit, sRGB, gamma, sRGB color gamut, warm color temperature to be displayed image data. It can be understood that B21~B24 represent the bit depth of each image, and their specific values can be manually set according to actual accuracy requirements, without relating to the technical improvements of the present application, and will not be described here.

From this, it can be seen that by respectively configuring color managers 21-23 for virtual layer data, real layer data, and mixed image data, and providing bypass processing function, the display pipeline 20 provided by the present invention can provide flexible color processing function for virtual layer data, real layer data, and mixed image data in different color spaces according to the actual requirements of the mixed reality display, thereby meeting the application requirements of the mixed reality display.

Those skilled in the art in this field can understand that the display pipeline 20 shown in Fig. 1 is only provide some non-limiting implementations of the image processor provided in the first aspect of the present invention, which is intended to provide specific proposal that is convenient for the public to implement, rather than limiting the scope of protection of the present invention.

Alternatively, in other embodiments, those skilled in the art may also integrate the display pipeline 20 with any one or more of the main processor 10, ISP pipeline 30, and color processing firmware 50 according to the above thoughts provided by the present invention, to construct a composite image processor with corresponding multiple functions, which will not be described here.

To sum up, the image processor, mixed reality display system, image processing method, and non-transitory computer-readable storage medium provided by the present invention, not only support the input of the external light parameter information, but also can replace a plurality of simple display pipelines with fewer and more complex display pipelines 20, thereby flexibly optimizing the display effects of virtual layer data and real layer data respectively, and allowing mixing of layers under different conditions to meet the color adjusting and managing requirements of various mixed reality applications.

Although the above methods are illustrated and described as a series of actions in order to simplify the explanation, it should be understood and appreciated that these methods are not limited by the order of actions, because according to one or more embodiments, some actions can occur in different order and/or concurrently with other actions from the illustrations and descriptions herein or not illustrated and described herein, but can be understood by those skilled in the art.

Those skilled in the art will understand that information, signals and data can be represented using any of a variety of different technologies and techniques. For example, the data, instructions, commands, information, signals, bits, symbols and chips cited throughout the above description may be represented by voltage, current, electromagnetic waves, magnetic fields or magnetic particles, optical fields or optical particles, or any combination thereof.

Those skilled in the art will further appreciate that various illustrative logic blocks, modules, circuits and algorithm steps described in combination with the embodiments disclosed herein can be implemented as electronic hardware, computer software or a combination of both. In order to clearly explain the interchangeability of hardware and software, various illustrative components, blocks, modules, circuits and steps are generally described above in the form of their functionality. Whether such functionality is implemented as hardware or software depends on the specific application and design constraints imposed on the overall system. Technicians can implement the described functionality in different ways for each specific application, but such implementation decisions should not be interpreted as leading to departure from the scope of the invention.

The various illustrative logic modules and circuits described in connection with the embodiments disclosed herein can be realized or executed by general-purpose processors, digital signal processors (DSPs), application specific integrated circuits (ASICs), field programmable gate arrays (FPGAs) or other programmable logic devices, discrete gate or transistor logic, discrete hardware components or any combination thereof designed to perform the functions described herein. The general processor can be a microprocessor, but in the alternative, the processor can be any conventional processor, controller, microcontroller or state machine. The processor can also be implemented as a combination of computing devices, such as a combination of DSP and microprocessors, a plurality of microprocessors, one or more microprocessors cooperating with the DSP core or any other such configuration.

The previous description of the disclosure is provided to enable any person skilled in the art to make or use the disclosure. Various modifications to the disclosure will be apparent to those skilled in the art, and the universal principles defined herein can be applied to other variants without departing from the spirit or scope of the disclosure. Therefore, this disclosure is not intended to be limited to the examples and designs described herein, but should be granted the widest scope consistent with the principles and novel features disclosed herein.

## Claims

1. An image processor, comprising:
a first color manager, connected to a renderer with an input end thereof, for obtaining a virtual layer data from the renderer and performing a first color processing to the virtual layer data;
a second color manager, connected to a camera with an input end thereof, for obtaining a real layer data from the camera and performing a second color processing to the real layer data;
a layer mixer, respectively connected to the first color manager and the second color manager with an input end thereof, for performing a layer mixing processing to the virtual layer data processed by the first color manager and the real layer data processed by the second color manager, to determine a mixed image data; and
a third color manager, connected to the layer mixer with an input end thereof, for obtaining the mixed image data from the layer mixer, performing a third color processing to the mixed image data, and outputting a mixed image data undergone the third color processing to a mixed reality display.

2. The image processor according to claim 1, further comprising a communication interface, wherein the communication interface is connected to a color processing firmware and each of the color managers,
the first color manager is configured to obtain a first register data from the color processing firmware via the communication interface according to a first color processing requirement, and return first statistical information to the color processing firmware,
the second color manager is configured to obtain a second register data from the color processing firmware via the communication interface according to a second color processing requirement, and return second statistical information to the color processing firmware,
the third color manager is configured to obtain a third register data from the color processing firmware via the communication interface according to a third color processing requirement, and return third statistical information to the color processing firmware.

3. The image processor according to claim 2, wherein each of the color managers respectively comprises a color tone mapper, a color gamut mapper and a color temperature processor, and is configured to obtain a register data related to at least one of color tone mapping, color gamut mapping and color temperature processing, from the color processing firmware via the communication interface, according to corresponding color processing requirement, and return statistical information related to the at least one of color tone mapping, color gamut mapping and color temperature processing to the color processing firmware.

4. The image processor according to claim 3, wherein each of the color managers is further configured as:
performing a histogram equalization processing to a corresponding virtual layer data, a corresponding real layer data or a corresponding mixed image data, according to the register data related to the color tone mapping, to determine the statistical information related to the color tone mapping; and/or
in response to a color processing requirement of transitioning from a large color gamut to a small color gamut, performing a mapping processing step by step to a corresponding virtual layer data, a corresponding real layer data or a corresponding mixed image data, according to the register data related to the color gamut mapping, to determine the statistical information related to the color gamut mapping.

5. The image processor according to claim 3, wherein each of the color managers further comprises a ReGamma unit and/or a DeGamma unit, and is configured to obtain a register data related to ReGamma processing and/or DeGamma processing from the color processing firmware via the communication interface, according to the corresponding color processing requirement, and return statistical information related to the ReGamma processing and/or the DeGamma processing to the color processing firmware.

6. The image processor according to claim 3, wherein the renderer further inputs an HDR metadata into the color processing firmware, and each of the color managers further comprises an HDR unit, and is configured to obtain a register data related to HDR processing from the color processing firmware via the communication interface, according to the corresponding color processing requirement, and return statistical information related to the HDR processing to the color processing firmware, wherein the register data related to HDR processing is updated and determined according to the HDR metadata and returned statistical information related to the HDR processing.

7. The image processor according to claim 3, further comprising the color processing firmware, wherein the color processing firmware is configured as:
obtaining external light parameter information; and
performing at least one of generating a color tone curve, generating a color gamut mapping function, performing a color temperature adjusting calculation and performing a brightness adjusting calculation, to update the register data, according to the light parameter information and the statistical information returned by at least one of the color managers.

8. The image processor according to claim 2, wherein data volume of the first register data and data volume of the second register data are smaller than data volume of the third register data, and data volume of the first statistical information and data volume of the second statistical information are smaller than data volume of the third statistical information.

9. The image processor according to claim 1, wherein the renderer is further used for rendering and generating one or more UI layer data, and the first color manager is further configured as:
obtaining the one or more UI layer data from the renderer and performing corresponding one or more fourth color processing to the UI layer data; and
inputting a UI layer data undergone the one or more fourth color processing into the layer mixer for performing the layer mixing processing, to determine a corresponding mixed image data.

10. The image processor according to claim 1, further comprising an image signal processor, wherein the second color manager is connected to the camera via the image signal processor, and the image signal processor is configured as:
obtaining a video stream data captured by the camera; and
performing an AWB processing and/or an AE processing to the video stream data, to generate the real layer data.

11. A mixed reality display system, comprising:
a renderer, for generating a virtual layer data;
a camera, for capturing a real layer data; and
an image processor according to anyone of claims 1-10, connected to the renderer and the camera to obtain the virtual layer data and the real layer data, and perform image processing according to the virtual layer data and the real layer data to output a mixed image data to be displayed.

12. An image processing method, comprising:
obtaining a virtual layer data from a renderer, and input the virtual layer data into a first color manager;
obtaining a real layer data from a camera and input the real layer data into a second color manager;
obtaining a color processing requirement;
controlling the first color manager to perform a first color processing to the virtual layer data, and/or controlling the second color manager to perform a second color processing to the real layer data, according to the color processing requirement;
performing a layer mixing processing to the layer data processed by the first color manager and the second color manager by a layer mixer to determine a mixed image data;
inputting the mixed image data to a third color manager, and performing a third color processing according to the color processing requirement; and
transmitting mixed image data outputted by the third color manager to a mixed reality display.

13. A non-transitory computer-readable storage medium, on which a computer instruction is stored, wherein when the computer instruction is executed by a processor, the image processing method according to claim 12 is implemented.
